# EUROPÄISCHE PATENTSCHRIFT

(11) **EP 3 640 604 B1**
(45) Veröffentlichungstag und Bekanntmachung des Hinweises auf die Patenterteilung: **16.08.2023**
(21) Anmeldenummer: 19199472.2
(22) Anmeldetag: 25.09.2019
(51) Int. Cl.: G01F 1/58

(54) **MAGNETISCH-INDUKTIVES DURCHFLUSSMESSGERÄT, MAGNETKREISVORRICHTUNG UND VERFAHREN ZUR HERSTELLUNG EINER MAGNETKREISVORRICHTUNG**
MAGNETIC-INDUCTIVE FLOW RATE MEASURING DEVICE, MAGNETIC CIRCUIT DEVICE AND METHOD FOR PRODUCING SAME
APPAREIL DE MESURE DE DÉBIT À INDUCTION MAGNÉTIQUE, DISPOSITIF DE CIRCUIT MAGNÉTIQUE ET PROCÉDÉ DE FABRICATION D'UN DISPOSITIF DE CIRCUIT MAGNÉTIQUE

(30) Priorität: 18.10.2018 DE 102018125865
(43) Veröffentlichungstag der Anmeldung: 22.04.2020
(73) Patentinhaber: Krohne AG, 4019 Basel (CH)
(72) Erfinder: Neven, Joseph, 26100 Romans (FR)
(74) Vertreter: Gesthuysen Patentanwälte

(56) Entgegenhaltungen:
- DE-A1-102005 063 150
- US-A- 3 446 071
- US-A- 5 540 103
- US-A1- 2001 002 553
- US-A1- 2014 109 685
- US-A1- 2014 150 567
- US-A1- 2015 020 607

## Beschreibung

Die Erfindung betrifft ein magnetisch-induktives Durchflussmessgerät, mit einem Messrohr zum Führen eines elektrisch leitfähigen Mediums, mit einer Spule zur Erzeugung eines das Messrohr zumindest teilweise durchsetzenden Magnetfeldes und mit einer Magnetkreisvorrichtung zum Führen des Magnetfeldes außerhalb des Messrohres, wobei die Magnetkreisvorrichtung wenigstens einen Spulenkern, ein erstes Jochelement, ein zweites Jochelement, einen ersten Polschuh und einen zweiten Polschuh aufweist, wobei der Spulenkern im Inneren der Spule angeordnet ist und wobei das Messrohr zwischen dem ersten Polschuh und dem zweiten Polschuh angeordnet ist. Zudem betrifft die Erfindung eine Magnetkreisvorrichtung für ein magnetisch-induktives Durchflussmessgerät, mit wenigstens einem Spulenkern, einem ersten Jochelement, einem zweiten Jochelement, einem ersten Polschuh und einem zweiten Polschuh und ein Verfahren zur Herstellung einer Magnetkreisvorrichtung .

Magnetisch-induktive Durchflussmessgeräte der in Rede stehenden Art sind in einer Vielzahl seit Jahrzehnten aus dem Stand der Technik bekannt. Das zugrunde liegende Messprinzip basiert auf der Trennung bewegter Ladungsträger in einem Magnetfeld. Die messtechnische Grundlage bildet ein Messrohr aus einem nichtmagnetischen Werkstoff, das auf der Strömungsseite durch eine isolierende Auskleidung elektrisch von dem durch das Messrohr strömenden Medium isoliert ist, und das von einem durch die Spule erzeugten Magnetfeld senkrecht zur Strömungsrichtung durchsetzt wird. Wird das Messrohr von einem Medium mit einer elektrischen Mindestleitfähigkeit durchströmt, werden die in dem leitfähigen Medium vorhandenen Ladungsträger durch das Magnetfeld abgelenkt. An senkrecht zum Magnetfeld und zur Strömungsrichtung angeordneten Messelektroden entsteht durch die Ladungstrennung eine Spannung, die mit einem Messgerät erfasst und als Messspannung ausgewertet wird. Die Messspannung ist proportional zur Strömungsgeschwindigkeit der mit dem Medium bewegten Ladungsträger, sodass aus der Strömungsgeschwindigkeit auf den Durchfluss des Mediums im Messrohr geschlossen werden kann.

Das von der Spule erzeugte Magnetfeld wird durch die Magnetkreisvorrichtung außerhalb des Messrohres geführt. Das Messrohr ist zwischen den Polschuhen der Magnetkreisvorrichtung angeordnet, wobei die Polschuhe bei bekannten Magnetkreisvorrichtungen bevorzugt flächig ausgebildet und parallel zueinander angeordnet sind. Ein Polschuh im Sinne der vorliegenden Anmeldung dient dazu, die Magnetfeldlinien in definierter Form aus der Magnetkreisvorrichtung austreten zu lassen und zu verteilen. Zwischen den Polschuhen der Magnetkreisvorrichtung bildet sich ein im Wesentlichen homogenes Magnetfeld aus, das das Messrohr durchsetzt. Als Spulenkern wird der Teil der Magnetkreisvorrichtung bezeichnet, der sich im Inneren der Spule befindet und von den Windungen der Spule umschlossen ist. Als Jochelement wird ein solcher Teil der Magnetkreisvorrichtung bezeichnet, der nicht von Windungen der Spule umschlossen ist und auch nicht zum Austreten der Magnetfeldlinien vorgesehen ist. Ein Jochelement ist also ein magnetisches Verbindungselement, das lediglich die Magnetfeldlinien führt und zur Verbindung des Spulenkerns und der Polschuhe dient.

Patentdokumente DE 10 2005 063 150 A1, US 2001/0002553 A1 und US 3,446,071 offenbaren magnetisch-induktive Durchflussmessgeräte des Standes der Technik mit einer Magnetkreisvorrichtung aus Metallblechelementen.

Magnetisch-induktive Durchflussmessgeräte und insbesondere die Magnetkreisvorrichtungen von magnetisch-induktiven Durchflussmessgeräten sind aufwendig in ihrer Konstruktion und aufgrund der Vielzahl der Elemente einer Magnetkreisvorrichtung ebenfalls aufwendig zusammenzubauen. Hierdurch entsteht ein erheblicher Zeit- und Kostenaufwand.

Der Erfindung liegt die Aufgabe zugrunde, ein magnetisch-induktives Durchflussmessgerät mit einer Magnetkreisvorrichtung und eine Magnetkreisvorrichtung für ein magnetisch-induktives Durchflussmessgerät bereitzustellen, die auf besonders einfache Art und Weise und zudem kostengünstig realisiert werden können.

Die Aufgabe ist gemäß den Merkmalen des kennzeichnenden Teils der Patentansprüche 1 bis 3 bei dem in Rede stehenden magnetisch-induktiven Durchflussmessgerät dadurch gelöst, dass die Magnetkreisvorrichtung aus einem zumindest teilweise gebogenen Blechelement oder aus einer Mehrzahl von zumindest teilweise gebogenen Blechelementen gebildet ist. Als Blechelement wird hier ein Metallstück verstanden, das im Vergleich zu seiner Breite und Länge eine geringe Dicke aufweist. Jedes der Blechelemente weist eine solche Geometrie auf, dass es sich in einer Ebene überschneidungsfrei abrollen lässt. Die einzelnen Blechelemente können also beispielsweise aus einem Ausgangsblech herausgetrennt werden und anschließend zu der Magnetkreisvorrichtung gebogen werden.

In der ersten Variante des magnetisch-induktiven Durchflussmessgerätes wird die Magnetkreisvorrichtung durch ein einziges Blechelement realisiert. In der zweiten Variante wird die Magnetkreisvorrichtung aus mehreren Blechelementen realisiert. Die mehreren Blechelemente werden dann miteinander zu der Magnetkreisvorrichtung verbunden, was weiter unten näher erläutert wird. Die gesamte Magnetkreisvorrichtung ist demnach ausschließlich aus einem Blechelement oder mehreren Blechelementen gebildet. Das bedeutet, dass sowohl der Spulenkern, als auch die Jochelemente und Polschuhe aus Blechelementen gebildet sind. Ist die gesamte Magnetkreisvorrichtung aus nur einem einzigen Blechelement gebildet, realisiert dieses eine Blechelement sowohl den Spulenkern, als auch die Jochelemente und die Polschuhe. Die gesamte Magnetkreisvorrichtung lässt sich in einer Ebene - bis auf die Verbindungsstellen der einzelnen Blechelemente für den Fall, dass die Magnetkreisvorrichtung aus mehreren miteinander verbundenen Blechelementen realisiert ist - überschneidungsfrei abrollen.

Die erfindungsgemäße Ausgestaltung weist den Vorteil auf, dass auf besonders einfache Art eine kostengünstige Magnetkreisvorrichtung hergestellt werden kann, da lediglich Blechelemente bereitgestellt und gebogen - und gegebenenfalls miteinander verbunden - werden müssen. Zudem ist die Magnetkreisvorrichtung platzsparend und ermöglicht somit die Herstellung eines kompakten magnetisch-induktiven Durchflussmessgerätes.

In einer erfindungsgemäßen Ausgestaltung des erfindungsgemäßen magnetisch-induktiven Durchflussmessgerätes, bei dem die Magnetkreisvorrichtung aus einem einzigen Blechelement gebildet ist, weist das Blechelement einen ersten Polschuhabschnitt, einen ersten Spulenkernabschnitt, einen ersten Jochelementabschnitt, einen zweiten Polschuhabschnitt, einen zweiten Jochelementabschnitt, einen zweiten Spulenkernabschnitt und einen dritten Polschuhabschnitt auf. Die einzelnen Abschnitte sind bevorzugt in der genannten Reihenfolge hintereinander angeordnet und gehen ineinander über bzw. grenzen aneinander an. Erfindungsgemäß ist nun weiter vorgesehen, dass der erste Polschuhabschnitt und der dritte Polschuhabschnitt zusammen den ersten Polschuh bilden. Der erste Polschuh ist also zweiteilig ausgebildet. Weiter ist vorgesehen, dass der zweite Polschuhabschnitt den zweiten Polschuh bildet, der zweite Polschuh ist also einteilig ausgebildet entgegen der Ausbildung des ersten Polschuhs. Zudem bildet in der erfindungsgemä-ßen Ausgestaltung der erste Jochelementabschnitt das erste Jochelement und der zweite Jochelementabschnitt das zweite Jochelement. Erfindungsgemäß ist weiter vorgesehen, dass der erste Spulenkernabschnitt und der zweite Spulenkernabschnitt zusammen den Spulenkern bilden. Der Spulenkern ist also auch zweiteilig ausgebildet. Zudem zeichnet sich die erfindungsgemäße Ausgestaltung dadurch aus, dass der erste Polschuhabschnitt und der dritte Polschuhabschnitt L-förmig ausgebildet sind und dass der erste Spulenkernabschnitt und der zweite Spulenkernabschnitt streifenförmig ausgebildet sind und an die Oberseite des L-Bodens ansetzend parallel zum L-Schaft verlaufend angeordnet sind.

In einer weiteren Ausgestaltung des erfindungsgemäßen magnetisch-induktiven Durchflussmessgerätes ist die Magnetkreisvorrichtung aus einem ersten Blechelement und einem zweiten Blechelement gebildet. Das erste Blechelement ist hierbei so ausgestaltet, dass es einen ersten Polschuhabschnitt aufweist, der den ersten Polschuh der Magnetkreisvorrichtung bildet. Der Rest der Magnetkreisvorrichtung wird durch das zweite Blechelement gebildet. Hierzu weist das zweite Blechelement einen ersten Spulenkernabschnitt, einen ersten Jochelementabschnitt, einen zweiten Polschuhabschnitt, einen zweiten Jochelementabschnitt und einen zweiten Spulenkernabschnitt auf. Das zweite Blechelement ist so gebogen, dass der erste Spulenkernabschnitt und der zweite Spulenkernabschnitt zusammen den Spulenkern der Magnetkreisvorrichtung bilden. Der erste Jochelementabschnitt bildet das erste Jochelement, der zweite Jochelementabschnitt bildet das zweite Jochelement. Der zweite Polschuhabschnitt bildet den zweiten Polschuh. Das erste Blechelement und das zweite Blechelement sind im Übergang zwischen erstem Polschuh zum Spulenkern miteinander verbunden.

In einer alternativen Ausführungsform des erfindungsgemäßen magnetisch-induktiven Durchflussmessgerätes ist die Magnetkreisvorrichtung aus mehreren Blechelementen gebildet, nämlich aus einem ersten Blechelement, einem zweiten Blechelement und einem dritten Blechelement. Durch jedes Blechelement wird ein Teil der Elemente der Magnetkreisvorrichtung realisiert. Diese Ausgestaltung weist den Vorteil auf, dass die Montage der Magnetkreisvorrichtung in dem magnetisch-induktiven Durchflussmessgerät erleichtert wird. Insbesondere wird der Aufbau der Magnetkreisvorrichtung um die Spule herum erleichtert. Da der Spulenkern auch durch einen Teil der Magnetkreisvorrichtung selbst gebildet ist, müssen die Blechelemente zumindest teilweise durch die Spule bzw. durch das Spuleninnere geführt werden. Dies kann auf besonders bevorzugte Weise durch die nachfolgende bevorzugte Weiterbildung realisiert werden:
In einer besonders bevorzugten Weiterbildung der alternativen Ausführungsform weist das erste Blechelement aufeinanderfolgend einen ersten Polschuhabschnitt, einen ersten Spulenkernabschnitt und einen ersten Jochelementabschnitt auf.

Das zweite Blechelement weist aufeinanderfolgend einen zweiten Jochelementabschnitt, einen zweiten Polschuhabschnitt und einen dritten Jochelementabschnitt auf. Das dritte Blechelement weist aufeinanderfolgend einen dritten Polschuhabschnitt, einen zweiten Spulenkernabschnitt und einen vierten Jochelementabschnitt auf.

Weiter ist bei dieser Ausgestaltung vorgesehen, dass der erste Polschuhabschnitt und der dritte Polschuhabschnitt zusammen den ersten Polschuh bilden. Der erste Polschuh ist also wiederum zweiteilig ausgebildet und wird durch einen Teil des ersten Blechelements und einen Teil des dritten Blechelements realisiert. Der zweite Polschuh wird durch den zweiten Polschuhabschnitt gebildet, ist also einteilig ausgestaltet und wird nur durch das zweite Blechelement realisiert. Der erste Spulenkernabschnitt und der zweite Spulenkernabschnitt bilden zusammen den Spulenkern, der ebenfalls zweiteilig ausgebildet ist und genau wie der erste Polschuh durch einen Teil des ersten Blechelements und einen Teil des zweiten Blechelements gebildet wird. Auch die Jochelemente sind zweiteilig ausgebildet: der erste Jochelementabschnitt und der zweite Jochelementabschnitt bilden zusammen das erste Jochelement und der dritte Jochelementabschnitt und der vierte Jochelementabschnitt bilden zusammen das zweite Jochelement. Das erste Blechelement und das zweite Blechelement sind demnach im Bereich des ersten Jochelements miteinander verbunden und das zweite Blechelement ist im Bereich des zweiten Jochelements miteinander verbunden.

Durch eine derartige Ausgestaltung ist eine besonders einfache Montage der Magnetkreisvorrichtung dadurch möglich, dass das erste Blechelement und das dritte Blechelement durch das Spuleninnere geführt werden, derart, dass die den Spulenkern bildenden Spulenkernabschnitte im Inneren der Spule verweilen. Bevorzugt sind die an die Spulenkernabschnitte angrenzenden Jochelementabschnitte demnach so ausgebildet, dass sie ebenfalls durch das Spuleninnere durchgeführt werden können. Anschließend können die Blechelemente dann um die Spule herum gebogen werden, nämlich derart, dass die Polschuhabschnitte den ersten Polschuh bilden und die Jochelemente von außen um die Spule herum geführt werden. Das zweite Blechelement kann dann so gebogen und mit dem ersten und dem dritten Blechelement im Bereich der Jochelemente verbunden werden, dass der erste Polschuh und der zweite Polschuh parallel zueinander einander gegenüberliegend angeordnet sind und insgesamt ein Magnetkreis gebildet wird.

Eine besonders bevorzugte Ausgestaltung des erfindungsgemäßen magnetisch-induktiven Durchflussmessgerätes ist dadurch gekennzeichnet, dass der erste Polschuhabschnitt und der dritte Polschuhabschnitt L-förmig ausgebildet sind und dass der erste Spulenkernabschnitt und der zweite Spulenkernabschnitt streifenförmig ausgebildet sind und an die Oberseite des L-Bodens ansetzend parallel zum L-Schaft verlaufend angeordnet sind. Die Ausgestaltung ist für eine aus mehreren Blechelementen gebildete Magnetkreisvorrichtung bevorzugt.

In einer weiteren Ausgestaltung ist der den zweiten Polschuh bildende zweite Polschuhabschnitt rechteckig ausgebildet. Besonders bevorzugt ist der zweite Polschuhabschnitt quadratisch ausgebildet. Die Ausgestaltung ist sowohl für eine aus einem Blechelement gebildete Magnetkreisvorrichtung als auch für eine aus mehreren Blechelementen gebildete Magnetkreisvorrichtung bevorzugt.

Eine weitere bevorzugte Ausgestaltung, die sowohl für eine aus einem Blechelement gebildete Magnetkreisvorrichtung als auch für eine aus mehreren Blechelementen gebildete Magnetkreisvorrichtung Anwendung findet, ist dadurch gekennzeichnet, dass die Jochelementabschnitte streifenförmig ausgebildet sind. Besonders bevorzugt ist es, wenn die Spulenkernabschnitte in die Jochelementabschnitte übergehen, womit gemeint ist, dass die Spulenkernabschnitte und die Jochelementabschnitte die gleiche Breite aufweisen und beide Abschnitte insgesamt durch einen Metallstreifen gleichbleibender Breite gebildet sind.

Insgesamt weist das erfindungsgemäße magnetisch-induktive Durchflussmessgerät weiter den Vorteil auf, dass zur Realisierung der Magnetkreisvorrichtung wenige, bevorzugt ein, zwei oder drei Blechelemente benötigt werden. Hierdurch ergibt es sich, dass gar keine oder nur wenige Verbindungsstellen zwischen den Blechelementen notwendig sind. Verbindungsstellen bilden einen Schwachpunkt einer Magnetkreisvorrichtung, da insbesondere an den Verbindungsstellen das Magnetfeld gestört werden kann. Erfindungsgemäß wird eine Magnetkreisvorrichtung bereitgestellt, oder wird ein magnetisch-induktives Durchflussmessgerät bereitgestellt, das wenige Störstellen für das Magnetfeld aufweist. In einer bevorzugten Ausgestaltung, bei der die Magnetkreisvorrichtung aus mehreren Blechelementen gebildet ist, sind die Blechelemente bündig miteinander verbunden, überlappen also nicht. In einer alternativen Ausgestaltung sind die Blechelemente überlappend miteinander verbunden. Ebenfalls denkbar ist, dass bei mehreren Blechelementen ein Teil der Blechelemente überlappend miteinander verbunden ist und der andere Teil der Blechelemente bündig miteinander verbunden ist. Die Verbindung der Blechelemente wird beispielsweise durch Schweißen, Clinchen oder Verschrauben oder eine andere bekannte Methode realisiert.

In einer besonders bevorzugten Ausgestaltung sind die Verbindungsstellen im Bereich der Jochelemente der Magnetkreisvorrichtung vorgesehen, da hier eine mögliche Störung des Magnetfeldes am unkritischsten ist.

Weiter oben ist ausgeführt worden, dass in bevorzugten Ausgestaltungen der Spulenkern der Magnetkreisvorrichtung zweiteilig ausgebildet ist, nämlich durch einen ersten Spulenkernabschnitt und einen zweiten Spulenkernabschnitt. Bei der zweiteiligen Realisierung des Spulenkerns sind in einer bevorzugten Ausgestaltung des erfindungsgemäßen magnetisch-induktiven Durchflussmessgerätes der erste Spulenkernabschnitt und der zweite Spulenkernabschnitt so zueinander angeordnet, dass sich zwischen den beiden Spulenkernabschnitten eine Lücke ergibt. Weiter bevorzugt werden durch diese Lücke die Zuleitungen für die Elektroden des magnetisch-induktiven Durchflussmessgerätes geführt. Erfindungsgemäß wird so eine sichere und zudem platzsparende Führung der Zuleitungen gewährleistet.

Neben dem magnetisch-induktiven Durchflussmessgerät betrifft die Erfindung ferner eine Magnetkreisvorrichtung für ein magnetisch-induktives Durchflussmessgerät. Die Magnetkreisvorrichtung weist wenigstens einen Spulenkern, ein erstes Jochelement, ein zweites Jochelement, einen ersten Polschuh und einen zweiten Polschuh auf.

Die der Erfindung zugrunde liegende Aufgabe ist bei der erfindungsgemäßen Magnetkreisvorrichtung dadurch gelöst, dass die Magnetkreisvorrichtung aus einem zumindest teilweise gebogenen Blechelement oder aus einer Mehrzahl von zumindest teilweise gebogenen Blechelementen gebildet ist.

In besonders bevorzugten Ausführungsformen der erfindungsgemäßen Magnetkreisvorrichtung ist die Magnetkreisvorrichtung gemäß einer der oben im Zusammenhang mit dem erfindungsgemäßen magnetisch-induktiven Durchflussmessgerät beschriebenen Ausgestaltungen ausgebildet. Sämtliche im Zusammenhang mit dem erfindungsgemäßen magnetisch-induktiven Durchflussmessgerät gemachten Ausführungen in Bezug auf die Magnetkreisvorrichtung sind entsprechend auf die erfindungsgemäße Magnetkreisvorrichtung zu übertragen und anzuwenden und umgekehrt.

Neben dem magnetisch-induktiven Durchflussmessgerät und der Magnetkreisvorrichtung betrifft die Erfindung zudem ein Verfahren zur Herstellung einer Magnetkreisvorrichtung zum Führen eines Magnetfeldes für ein magnetisch-induktives Durchflussmessgerät mit einer Spule. Die Magnetkreisvorrichtung weist wenigstens einen Spulenkern, ein erstes Jochelement, ein zweites Jochelement, einen ersten Polschuh und einen zweiten Polschuh auf. Bei dem Verfahren wird die funktionsnotwendige Spule eines magnetisch-induktiven Durchflussmessgerätes direkt mit der Magnetkreisvorrichtung zusammengefügt wobei die Spule den Spulenkern der fertig hergestellten Magnetkreisvorrichtung umgibt. Das erfindungsgemäße Verfahren zeichnet sich dadurch aus, dass in einem Austrennschritt wenigstens ein Blechelement aus einem ebenen Ausgangsblech herausgetrennt wird, dass in einem Führungsschritt das wenigstens eine Blechelement durch die Spule geführt wird und dass in einem Biegeschritt das wenigstens eine Blechelement zu der Magnetkreisvorrichtung gebogen wird.

Wenn davon die Rede ist, dass wenigstens ein Blechelement aus einem Ausgangsblech herausgetrennt wird, dann geschieht dieses Heraustrennen bevorzugt mit einer im Bereich der Metallverarbeitung bekannten Methode. Das Blechelement kann insbesondere spanend oder spanfrei herausgetrennt werden. Beispielsweise erfolgt das Heraustrennen durch Laserschneiden oder Ausstanzen. Wenn weiter davon die Rede ist, dass wenigstens ein Blechelement aus einem ebenen Ausgangsblech herausgetrennt wird, dann können insbesondere auch mehrere Blechelemente aus einem Ausgangsblech herausgetrennt werden. Die mehreren Blechelemente können dann aus einem gemeinsamen Ausgangsblech oder aus mehreren Ausgangsblechelementen herausgetrennt werden.

In einer besonders vorteilhaften Ausführungsform des Verfahrens wird genau ein Blechelement aus dem Ausgangsblech herausgetrennt. Das herausgetrennte Blechelement weist einen ersten Polschuhabschnitt, einen ersten Spulenkernabschnitt, einen ersten Jochelementabschnitt, einen zweiten Polschuhabschnitt, einen zweiten Jochelementabschnitt, einen zweiten Spulenkernabschnitt und einen dritten Polschuhabschnitt auf. In dem Biegeschritt wird das Blechelement derart gebogen, dass der erste Polschuhabschnitt und der dritte Polschuhabschnitt zusammen den ersten Polschuh bilden, der zweite Polschuhabschnitt den zweiten Polschuh bildet, der erste Jochelementabschnitt das erste Jochelement bildet, der zweite Jochelementabschnitt das zweite Jochelement bildet und der erste Spulenkernabschnitt und der zweite Spulenkernabschnitt zusammen den Spulenkern bilden. In dem Führungsschritt wird das Blechelement derart durch die Spule geführt, dass die beiden Spulenkernabschnitte im Inneren der Spule positioniert werden, um den Spulenkern bilden zu können.

In einer weiteren bevorzugten Ausführungsform des Verfahrens wird die Magnetkreisvorrichtung aus einer Mehrzahl von Blechelementen gebildet. Erfindungsgemäß werden im Austrennschritt mehrere Blechelemente aus einem ebenen Ausgangsblech oder aus mehreren ebenen Ausgangsblechelementen herausgetrennt. In dem Führungsschritt wird wenigstens eins der Blechelemente durch die Spule geführt. Erfindungsgemäß können im Führungsschritt auch mehrere Blechelemente, insbesondere zwei Blechelemente, durch die Spule geführt werden. Im Biegeschritt werden die mehreren Blechelemente zu jeweils einem Teilabschnitt der Magnetkreisvorrichtung gebogen. In einem Verbindungsschritt werden die mehreren Blechelemente miteinander zu der Magnetkreisvorrichtung verbunden.

In dem Verbindungsschritt werden die Blechelemente insbesondere miteinander verschweißt, verschraubt oder verclincht. Jegliche andere Methode ist jedoch auch von der Erfindung umfasst.

Eine besondere Variante des erfindungsgemäßen Verfahrens zeichnet sich dadurch aus, dass der Biegeschritt eine Mehrzahl von Teil-Biegeschritten aufweist. Eine erste Anzahl der Teil-Biegeschritte wird ausgeführt, bevor der Führungsschritt ausgeführt wird. Nach dem Führungsschritt werden die verbleibenden Teil-Biegeschritte ausgeführt. Besonders bevorzugt wird durch die verbleibenden Teil-Biegeschritte eine formschlüssige Verbindung zwischen der Magnetkreisvorrichtung und der Spule hergestellt.

Im Einzelnen gibt es nun verschiedene Möglichkeiten, das erfindungsgemä-ße magnetisch-induktive Durchflussmessgerät, die erfindungsgemäße Magnetkreisvorrichtung und das Verfahren zur Herstellung einer Magnetkreisvorrichtung auszugestalten und weiterzubilden. Dazu wird verwiesen sowohl auf die den unabhängigen Patentansprüchen nachgeordneten Patentansprüche als auch auf die Beschreibung bevorzugter Ausführungsbeispiele in Verbindung mit der Zeichnung. In der Zeichnung zeigen
- Fig. 1a: ein magnetisch-induktives Durchflussmessgerät mit einer Magnetkreisvorrichtung in einer ersten Ansicht,
- Fig. 1b: das magnetisch-induktive Durchflussmessgerät aus Fig. 1a in einer zweiten Ansicht,
- Fig. 1c: das magnetisch-induktive Durchflussmessgerät aus Fig. 1a in einer dritten Ansicht,
- Fig. 2: eine erste Ausgestaltung einer Magnetkreisvorrichtung
- Fig. 3: eine zweite Ausgestaltung einer Magnetkreisvorrichtung,
- Fig. 4: eine dritte Ausgestaltung einer Magnetkreisvorrichtung, wie ebenfalls in den Fig. 1a-1c gezeigt
- Fig. 5a: ein Blech einer Magnetkreisvorrichtung im ausgerollten Zustand,
- Fig. 5b: das in Fig. 4a gezeigte Blechelement einer Magnetkreisvorrichtung im gebogenen Zustand,
- Fig. 6a: ein weiteres Blechelement einer Magnetkreisvorrichtung im ausgerollten Zustand,
- Fig. 6b: das in Fig. 5a gezeigte Blechelement im gebogenen Zustand,
- Fig. 7a-7c: eine Spule mit einem Teil der Magnetkreisvorrichtung in drei verschiedenen Ansichten,
- Fig. 8: ein Blockdiagramm eines ersten Verfahrens zur Herstellung einer Magnetkreisvorrichtung und
- Fig. 9: ein Blockdiagramm eines zweiten Verfahrens zur Herstellung einer Magnetkreisvorrichtung.

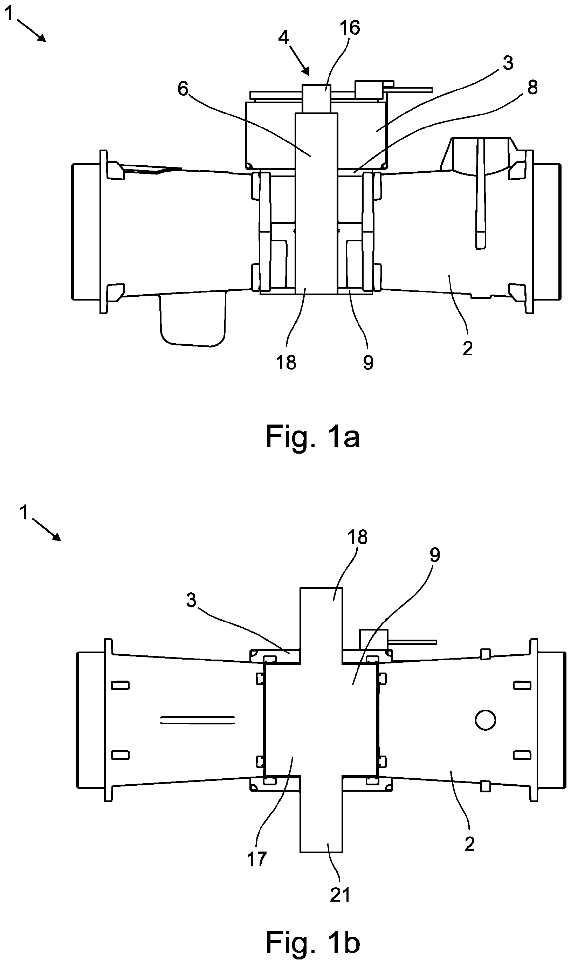

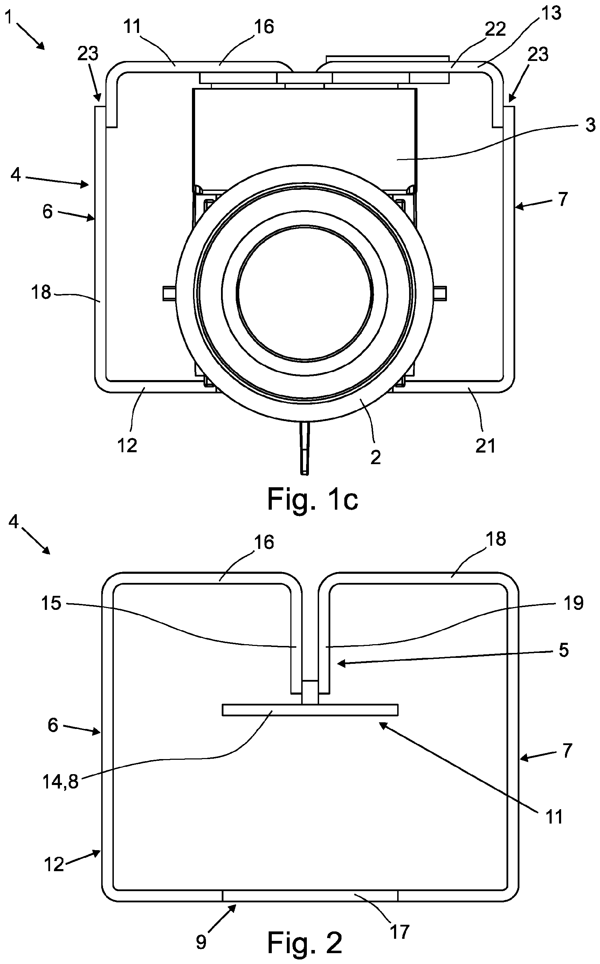

In den Fig. 1a bis 1c ist ein magnetisch-induktives Durchflussmessgerät 1 in verschiedenen Ansichten gezeigt. Fig. la zeigt das magnetisch-induktive Durchflussmessgerät 1 in einer Seitenansicht, Fig. 1b zeigt das magnetisch-induktive Durchflussmessgerät 1 von der Unterseite und Fig. 1c zeigt das magnetisch-induktive Durchflussmessgerät 1 in Strömungsrichtung des Mediums. Das Medium fließt durch das Messrohr 2 und wird zumindest teilweise von einem Magnetfeld durchsetzt, wobei das Magnetfeld nicht dargestellt ist. Das Magnetfeld wird von einer Spule 3 erzeugt und in der Magnetkreisvorrichtung 4 geführt. Die Magnetkreisvorrichtung 4 weist einen Spulenkern 5, ein erstes Jochelement 6, ein zweites Jochelement 7, einen ersten Polschuh 8 und einen zweiten Polschuh 9 auf. Der Spulenkern 5 der Magnetkreisvorrichtung 2 ist der Teil, der sich im Inneren der Spule 3 befindet und von den Windungen der Spule 3 umschlossen ist. Die Jochelemente 6, 7 dienen zum Führen der Magnetfeldlinien, wohingegen die Polschuhe 8, 9 dazu dienen, die Magnetfeldlinien in definierter Form aus der Magnetkreisvorrichtung 2 austreten zu lassen. Die beiden Polschuhe 8, 9 sind einander gegenüberliegend und parallel zueinander angeordnet. Zwischen den Polschuhen 8, 9 wird im Betriebszustand des magnetisch-induktiven Durchflussmessgerätes 1 ein im Wesentlichen homogenes Magnetfeld erzeugt, welches das Messrohr 2 durchsetzt, das zwischen den Polschuhen 8, 9 angeordnet ist.

Die Magnetkreisvorrichtung 4 des magnetisch-induktiven Durchflussmessgerätes 1 wird nun anhand der folgenden Figuren beschrieben.

In Fig. 2 dargestellt ist eine erste Variante einer Magnetkreisvorrichtung 4 für ein magnetisch-induktives Durchflussmessgerät 1. Die Magnetkreisvorrichtung 4 weist einen Spulenkern 5, ein erstes Jochelement 6, ein zweites Jochelement 7, einen ersten Polschuh 8 und einen zweiten Polschuh 9 auf. Die gesamte Magnetkreisvorrichtung 4 ist aus einem gebogenen Blechelement 10 gebildet, das eine derartige Geometrie aufweist, dass es sich in einer Ebene überschneidungsfrei abrollen lässt. Die Magnetkreisvorrichtung 4 ist also auf besonders einfache und kostengünstige Art und Weise herstellbar, nämlich dadurch, dass ein entsprechendes Blechelement 10 bereitgestellt, beispielsweise ausgestanzt oder ausgeschnitten, wird und zu der Magnetkreisvorrichtung 4 gebogen wird. Um eine vollständige Magnetkreisvorrichtung 4 realisieren zu können, weist das Blechelement 10 im ausgerollten Zustand nacheinander einen ersten Polschuhabschnitt 14, einen ersten Spulenkernabschnitt 15, einen ersten Jochelementabschnitt 16, einen zweiten Polschuhabschnitt 17, einen zweiten Jochelementabschnitt 18, einen zweiten Spulenkernabschnitt 19 und einen dritten Polschuhabschnitt 20 auf. Das Blechelement 10 wird dann so gebogen, dass der erste Polschuhabschnitt 14 und der dritte Polschuhabschnitt 20 zusammen den ersten Polschuh 8 bilden, der zweite Polschuhabschnitt 17 den zweiten Polschuh 9 bildet, der erste Jochelementabschnitt 16 das erste Jochelement 6 bildet, der zweite Jochelementabschnitt 18 das zweite Jochelement 7 bildet und der erste Spulenkernabschnitt 15 und der zweite Spulenkernabschnitt 19 zusammen den Spulenkern 5 bilden. Bei der dargestellten Ausgestaltung sind also sowohl der Spulenkern 5 als auch der erste Polschuh 8 zweiteilig ausgebildet.

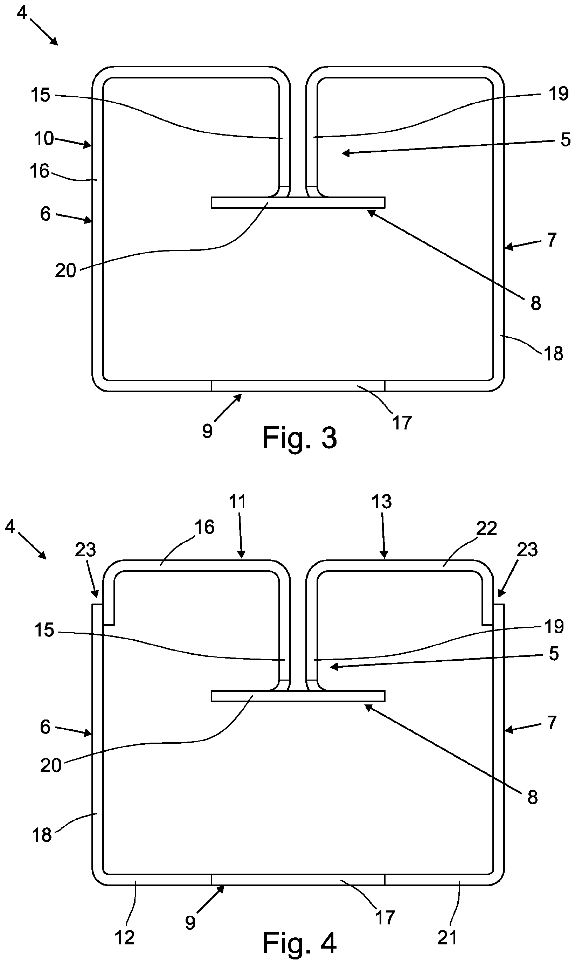

In Fig. 3 ist eine weitere Ausgestaltung der Magnetkreisvorrichtung 4 dargestellt. Die hier dargestellte Magnetkreisvorrichtung 4 unterscheidet sich von der in Fig. 2 dargestellten Variante dadurch, dass die Magnetkreisvorrichtung 4 aus einem ersten Blechelement 11 und einem zweiten Blechelement 12 gebildet ist. Das erste Blechelement 11 ist hierbei so ausgestaltet, dass es es einen ersten Polschuhabschnitt 14 aufweist, der den ersten Polschuh 8 der Magnetkreisvorrichtung 4 bildet. Der Rest der Magnetkreisvorrichtung 4 wird durch das zweite Blechelement 12 gebildet. Hierzu weist das zweite Blechelement einen ersten Spulenkernabschnitt 15, einen ersten Jochelementabschnitt 16, einen zweiten Polschuhabschnitt 17, einen zweiten Jochelementabschnitt 18 und einen zweiten Spulenkernabschnitt 19 auf. Das zweite Blechelement 12 ist so gebogen, dass der erste Spulenkernabschnitt 15 und der zweite Spulenkernabschnitt 19 zusammen den Spulenkern 5 der Magnetkreisvorrichtung 4 bilden. Der erste Jochelementabschnitt 16 bildet das erste Jochelement 6, der zweite Jochelementabschnitt 18 bildet das zweite Jochelement 7. Der zweite Polschuhabschnitt 17 bildet den zweiten Polschuh 9. Das erste Blechelement 11 und das zweite Blechelement 12 sind im Übergang zwischen erstem Polschuh 8 zum Spulenkern 5 miteinander verbunden.

Fig. 4 zeigt eine weitere Ausgestaltung der Magnetkreisvorrichtung 4. Im Unterschied zu der in Fig. 2 dargestellten Magnetkreisvorrichtung 4 besteht die hier dargestellte Magnetkreisvorrichtung 4 aus einem ersten Blechelement 11, einem zweiten Blechelement 12 und einem dritten Blechelement 13, die gemeinsam die Magnetkreisvorrichtung 4 bilden. Die hier gezeigte Magnetkreisvorrichtung 4 entspricht der in den Fig. 1a bis 1c gezeigten Magnetkreisvorrichtung 4. Das erste Blechelement 11 weist aufeinanderfolgend einen ersten Polschuhabschnitt 14, einen ersten Spulenkernabschnitt 15 und einen ersten Jochelementabschnitt 16 auf. Das zweite Blechelement 12 hingegen weist aufeinanderfolgend einen zweiten Jochelementabschnitt 18, einen zweiten Polschuhabschnitt 17 und einen dritten Jochelementabschnitt 21 auf und das dritte Blechelement 13 weist aufeinanderfolgend einen dritten Polschuhabschnitt 20, einen zweiten Spulenkernabschnitt 19 und einen vierten Jochelementabschnitt 22 auf. Bei der Ausgestaltung wird der erste Polschuh 8 zusammen aus dem ersten Polschuhabschnitt 14 und dem zweiten Polschuhabschnitt 20 gebildet. Der zweite Polschuh 9 hingegen wird durch den zweiten Polschuhabschnitt 17 gebildet. Der Spulenkern 5 ist ebenfalls zweiteilig ausgebildet und wird durch den ersten Spulenkernabschnitt 15 und den zweiten Spulenkernabschnitt 19 gebildet. Entgegen der Ausgestaltung nach Fig. 2 sind der vorliegenden Ausgestaltung auch das erste Jochelement 6 und das zweite Jochelement 7 zweiteilig ausgebildet, das erste Jochelement 6 wird nämlich gebildet durch den ersten Jochelementabschnitt 16 und den zweiten Jochelementabschnitt 18 und das zweite Jochelement 7 wird gebildet durch den dritten Jochelementabschnitt 21 und den vierten Jochelementabschnitt 22. Die drei Blechelemente 11, 12 und 13 sind an zwei Verbindungsstellen 23 miteinander verbunden, die Verbindungsstellen 23 befinden sich im Bereich des ersten Jochelements 6 und des zweiten Jochelements 7. Das erste Blechelement 11 und das zweite Blechelement 12 sind an der Verbindungsstelle 23 überlappend hintereinander verbunden, ebenso sind das zweite Blechelement 12 und das dritte Blechelement 13 an der anderen Verbindungsstelle 23 überlappend miteinander verbunden. Die Ausgestaltung nach Fig. 3 weist den Vorteil auf, dass der Zusammenbau des gesamten magnetisch-induktiven Durchflussmessgerätes 1 durch eine solche Magnetkreisvorrichtung 2 erheblich vereinfacht wird. Insbesondere werden die Blechelemente 11 und 12 durch das Innere der Spule 3 geführt, nämlich so, dass der erste Spulenkernabschnitt 15 des ersten Blechelements 11 und der zweite Spulenkernabschnitt 19 des dritten Blechelements 13 sich im Inneren der Spule 3 befinden und von den Windungen der Spule 3 umschlossen werden. Anschließend können die Blechelemente 11 und 13 mit dem Blechelement 12 verbunden werden. Hierdurch ist es möglich, die Spulenkernabschnitte 15, 19 und entsprechend auch die Jochelementabschnitte 16, 22 auf die Maße der Spule 3, insbesondere des Spuleninneren, anzupassen.

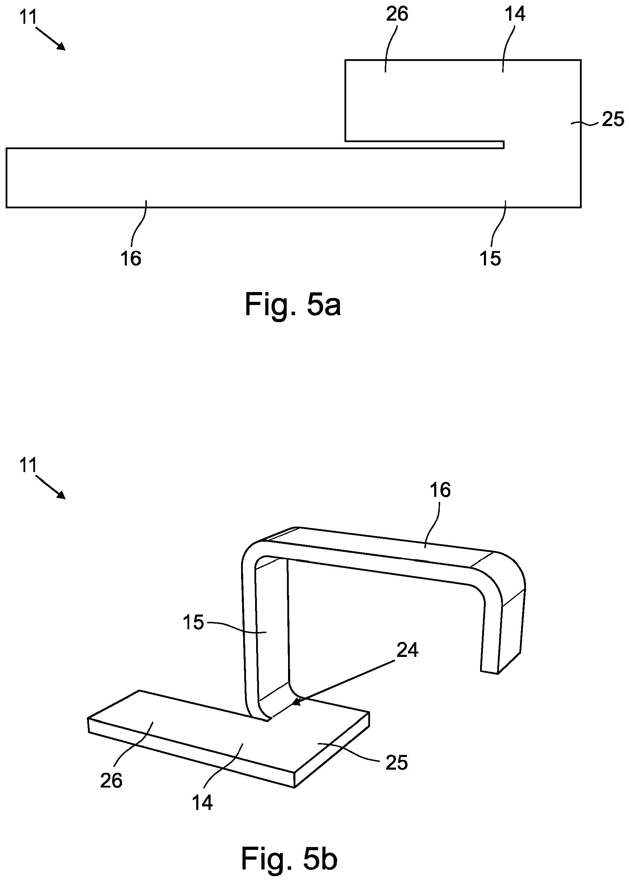

In den Fig. 5a und 5b ist ein Teil der Magnetkreisvorrichtung 4, nämlich das erste Blechelement 11 gezeigt. Fig. 5a zeigt das Blechelement 11 im abgerollten Zustand, wohingegen Fig. 5b das erste Blechelement 11 im gebogenen Zustand zeigt. Durch das Blechelement 11 wird der erste Polschuhabschnitt 14, der erste Spulenkernabschnitt 15 und der erste Jochelementabschnitt 16 realisiert. Der erste Polschuhabschnitt 14 ist L-förmig ausgebildet, was insbesondere gut in Fig. 5b in der gebogenen Ausgestaltung sichtbar ist. Der erste Spulenkernabschnitt 15 hingegen ist streifenförmig ausgebildet und setzt an die Oberseite 24 des L-Bodens 25 des ersten Polschuhabschnitts 14 an. Der streifenförmige erste Spulenkernabschnitt 15 verläuft parallel zum L-Schaft 26 des ersten Polschuhabschnitt 14 und geht in den ersten Jochelementabschnitt 16 über, der ebenfalls streifenförmig ausgestaltet ist. Das erste Blechelement 11 und das dritte Blechelement 13 sind identisch ausgebildet.

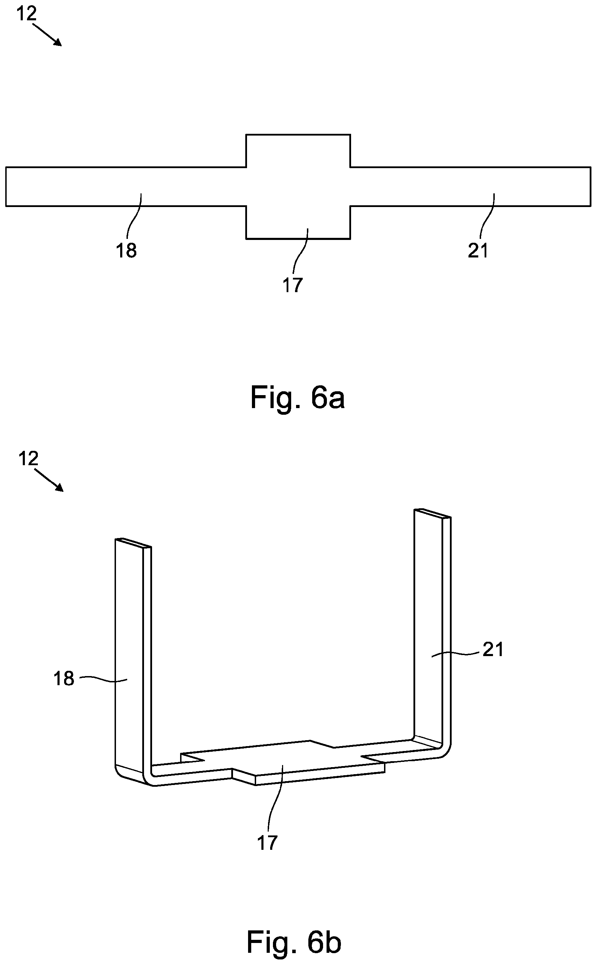

Die Fig. 6a und 6b zeigen das zweite Blechelement 12 der Magnetkreisvorrichtung 4. Fig. 6a zeigt das Blechelement 12 im abgerollten Zustand, wohingegen Fig. 6b das zweite Blechelement 12 im gebogenen Zustand zeigt. Durch das Blechelement 12 wird der zweite Jochelementabschnitt 18, der zweite Polschuhabschnitt 17 und der dritte Jochelementabschnitt 21 realisiert. Der zweite Polschuhabschnitt 17 bildet auch den zweiten Polschuh 9, wie insbesondere in der Fig. 1b ersichtlich ist. Der zweite Polschuhabschnitt 17 ist quadratisch ausgebildet, wohingegen die beiden Jochelementabschnitte 18 und 21 streifenförmig ausgebildet sind.

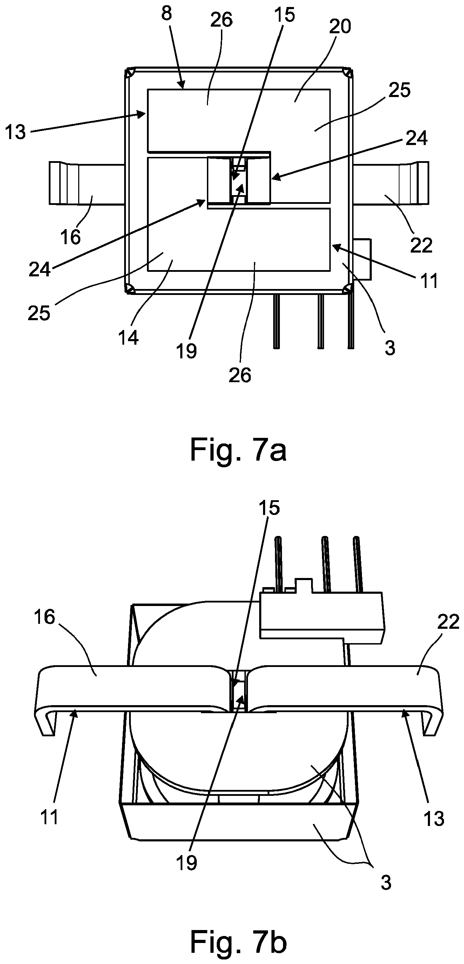

In den Fig. 7a bis 7c ist die Spule 3 zusammen mit dem ersten Blechelement 11 und dem dritten Blechelement 13 gezeigt. Fig. 7a zeigt die dem Messrohr 2 zugewandte Seite der Spule 3 zusammen mit einem Teil der Magnetkreisvorrichtung 4, insbesondere eine Draufsicht auf den ersten Spulenkern 8, der durch den ersten Polschuhabschnitt 14 des ersten Blechelements 11 und den dritten Polschuhabschnitt 20 des dritten Blechelements 13 gebildet wird. Die beiden L-förmigen Polschuhabschnitte 14, 20 sind so zueinander angeordnet, dass sich insgesamt eine quadratische Polschuhfläche bildet. Die beiden Oberseiten 24 der L-Böden 25 zeigen zueinander. Die an die Oberseiten 24 der L-Böden 25 angrenzenden Spulenkernabschnitte 15, 19 sind im 90°-Winkel von den Polschuhabschnitten 14, 20 weggebogen und durch das Innere der Spule 3 geführt.

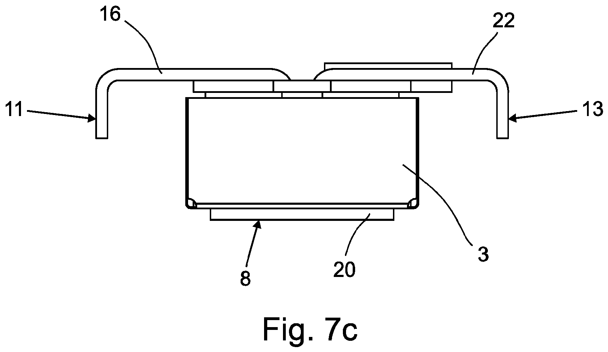

Fig. 7b zeigt die dem Messrohr 2 abgewandte Seite der Spule 3 zusammen mit den aus dem Spuleninneren austretenden Blechelementen 11 und 13. Nachdem die Blechelemente 11, 13 durch das Spuleninnere geführt sind, derart, dass die Spulenkernabschnitte 15, 19 von den Windungen der Spule 3 umschlossen sind, werden die an die Spulenkernabschnitte 15, 19 angrenzenden Jochelementabschnitte 16, 22 ebenfalls im 90°-Winkel zu den Spulenkernabschnitten 15, 19 umgebogen. Hierdurch wird eine formschlüssige Verbindung zwischen der Magnetkreisvorrichtung 4 und der Spule 3 hergestellt. Das wird insbesondere in der Fig. 7c ersichtlich, die eine Seitenansicht der Spule 3 zeigt.

In den Figuren besteht die Spule 3 aus einem Spulenkasten und der eigentlichen Spule. Die genaue Ausgestaltung der Spule 3 ist jedoch für die Erfindung unwesentlich, sodass sämtliche Bauformen der Spule 3 von der Erfindung umfasst sind.

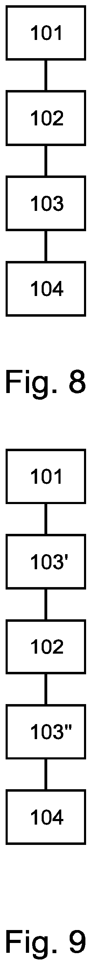

Fig. 8 zeigt ein Blockdiagramm eines ersten Verfahrens zur Herstellung einer Magnetkreisvorrichtung für ein magnetisch-induktives Durchflussmessgerät. In einem Austrennschritt 101 werden drei Blechelemente aus einem Ausgangsblech ausgetrennt. In einem auf den Austrennschritt 101 folgenden Führungsschritt 102 werden zwei der drei Blechelemente durch das Innere einer Spule geführt. In einem anschließenden Biegeschritt 103 werden die Blechelemente zu der Magnetkreisvorrichtung gebogen. Um die einzelnen Blechelemente miteinander zu verbinden, folgt ein Verbindungsschritt 104.

Fig. 9 zeigt ein Blockdiagramm eines zweiten Verfahrens zur Herstellung einer Magnetkreisvorrichtung für ein magnetisch-induktives Durchflussmessgerät. Das Verfahren unterscheidet sich von dem in Fig. 8 dargestellten Verfahren dadurch, dass der Biegeschritt 103 in zwei Teil-Biegeschritten 103' und 103" durchgeführt wird. Nach dem Heraustrennen der Blechelemente in dem Austrennschritt 101 werden die Blechelemente in dem ersten Teil-Biegeschritte 103' teilweise gebogen. In dem anschließenden Führungsschritt 102 werden die Blechelemente zumindest teilweise durch das Spuleninnere geführt. Anschließend erfolgt der zweite Teil-Biegeschritt 103". Bevorzugt werden hierbei die Blechelemente so um die Spule gebogen, dass eine formschlüssige Verbindung zwischen den Blechelementen und der Spule entsteht. In einem Verbindungsschritt 104 werden die einzelnen Blechelemente anschließend miteinander verbunden und bilden so die Magnetkreisvorrichtung.

### Bezugszeichen

- 1: magnetisch-induktives Durchflussmessgerät
- 2: Messrohr
- 3: Spule
- 4: Magnetkreisvorrichtung
- 5: Spulenkern
- 6: erstes Jochelement
- 7: zweites Jochelement
- 8: erster Polschuh
- 9: zweiter Polschuh
- 10: Blechelement
- 11: erstes Blechelement
- 12: zweites Blechelement
- 13: drittes Blechelement
- 14: erster Polschuhabschnitt
- 15: erster Spulenkernabschnitt
- 16: erster Jochelementabschnitt
- 17: zweiter Polschuhabschnitt
- 18: zweiter Jochelementabschnitt
- 19: zweiter Spulenkernabschnitt
- 20: dritter Polschuhabschnitt
- 21: dritter Jochelementabschnitt
- 22: vierter Jochelementabschnitt
- 23: Verbindungsstelle
- 24: Oberseite L-Boden
- 25: L-Boden
- 26: L-Schaft

- 101: Austrennschritt
- 102: Führungsschritt
- 103: Biegeschritt
- 103': erste Anzahl Teil-Biegeschritte
- 103": zweite Anzahl Teil-Biegeschritte
- 104: Verbindungsschritt

## Patentansprüche

1. Magnetisch-induktives Durchflussmessgerät (1), mit einem Messrohr (2) zum Führen eines elektrisch leitfähigen Mediums, mit einer Spule (3) zur Erzeugung eines das Messrohr (2) zumindest teilweise durchsetzenden Magnetfeldes und mit einer Magnetkreisvorrichtung (4) zum Führen des Magnetfeldes außerhalb des Messrohres (2), wobei die Magnetkreisvorrichtung (4) wenigstens einen Spulenkern (5), ein erstes Jochelement (6), ein zweites Jochelement (7), einen ersten Polschuh (8) und einen zweiten Polschuh (9) aufweist, wobei der Spulenkern (5) im Inneren der Spule (3) angeordnet ist und wobei das Messrohr (2) zwischen dem ersten Polschuh (8) und dem zweiten Polschuh (9) angeordnet ist,
wobei die Magnetkreisvorrichtung (4) aus einem zumindest teilweise gebogenen Blechelement (10) gebildet ist, wobei das Blechelement (10) einen ersten Polschuhabschnitt (14), einen ersten Spulenkernabschnitt (15), einen ersten Jochelementabschnitt (16), einen zweiten Polschuhabschnitt (17), einen zweiten Jochelementabschnitt (18), einen zweiten Spulenkernabschnitt (19) und einen dritten Polschuhabschnitt (20) aufweist, und wobei das Blechelement (10) derart gebogen ist, dass der erste Polschuhabschnitt (14) und der dritte Polschuhabschnitt (20) zusammen den ersten Polschuh (8) bilden, der zweite Polschuhabschnitt (17) den zweiten Polschuh (9) bildet, der erste Jochelementabschnitt (16) das erste Jochelement (6) bildet, der zweite Jochelementabschnitt (18) das zweite Jochelement (7) bildet und der erste Spulenkernabschnitt (15) und der zweite Spulenkernabschnitt (19) zusammen den Spulenkern (5) bilden,
**dadurch gekennzeichnet,**
**dass** der erste Polschuhabschnitt (14) und der dritte Polschuhabschnitt (20) L-förmig ausgebildet sind und dass der erste Spulenkernabschnitt (15) und der zweite Spulenkernabschnitt (19) streifenförmig ausgebildet sind und an die Oberseite (24) des L-Bodens (25) ansetzend parallel zum L-Schaft (26) verlaufend angeordnet sind.

2. Magnetisch-induktives Durchflussmessgerät (1), mit einem Messrohr (2) zum Führen eines elektrisch leitfähigen Mediums, mit einer Spule (3) zur Erzeugung eines das Messrohr (2) zumindest teilweise durchsetzenden Magnetfeldes und mit einer Magnetkreisvorrichtung (4) zum Führen des Magnetfeldes außerhalb des Messrohres (2), wobei die Magnetkreisvorrichtung (4) wenigstens einen Spulenkern (5), ein erstes Jochelement (6), ein zweites Jochelement (7), einen ersten Polschuh (8) und einen zweiten Polschuh (9) aufweist, wobei der Spulenkern (5) im Inneren der Spule (3) angeordnet ist und wobei das Messrohr (2) zwischen dem ersten Polschuh (8) und dem zweiten Polschuh (9) angeordnet ist,
**dadurch gekennzeichnet,**
**dass** die Magnetkreisvorrichtung (4) aus einer Mehrzahl von zumindest teilweise gebogenen Blechelementen (11, 12) gebildet ist, nämlich dass die Magnetkreisvorrichtungen (4) aus zwei Blechelement (11, 12) gebildet ist, wobei das erste Blechelement (11) einen ersten Polschuhabschnitt (14) aufweist und den ersten Polschuh (8) bildet und wobei das zweite Blechelement (12) einen ersten Spulenkernabschnitt (15), einen ersten Jochelementabschnitt (16), einen zweiten Polschuhabschnitt (17), einen zweiten Jochelementabschnitt (18) und einen zweiten Spulenkernabschnitt (19) aufweist und derart gebogen ist, dass der erste Spulenkernabschnitt (15) und der zweite Spulenkernabschnitt (19) zusammen den Spulenkern (5) bilden, der erste Jochelementabschnitt (16) das erste Jochelement (6) bildet und der zweite Jochelementabschnitt (18) das zweite Jochelement (7) bildet.

3. Magnetisch-induktives Durchflussmessgerät (1), mit einem Messrohr (2) zum Führen eines elektrisch leitfähigen Mediums, mit einer Spule (3) zur Erzeugung eines das Messrohr (2) zumindest teilweise durchsetzenden Magnetfeldes und mit einer Magnetkreisvorrichtung (4) zum Führen des Magnetfeldes außerhalb des Messrohres (2), wobei die Magnetkreisvorrichtung (4) wenigstens einen Spulenkern (5), ein erstes Jochelement (6), ein zweites Jochelement (7), einen ersten Polschuh (8) und einen zweiten Polschuh (9) aufweist, wobei der Spulenkern (5) im Inneren der Spule (3) angeordnet ist und wobei das Messrohr (2) zwischen dem ersten Polschuh (8) und dem zweiten Polschuh (9) angeordnet ist,
**dadurch gekennzeichnet,**
**dass** die Magnetkreisvorrichtung (4) aus einer Mehrzahl von zumindest teilweise gebogenen Blechelementen (11, 12, 13) gebildet ist, nämlich aus einem ersten Blechelement (11), einem zweiten Blechelement (12) und einem dritten Blechelement (13) gebildet ist, dass das erste Blechelement (11) aufeinanderfolgend einen ersten Polschuhabschnitt (14), einen ersten Spulenkernabschnitt (15) und einen ersten Jochelementabschnitt (16) aufweist, dass das zweite Blechelement (12) aufeinanderfolgend einen zweiten Jochelementabschnitt (18), einen zweiten Polschuhabschnitt (17) und einen dritten Jochelementabschnitt (21) aufweist und dass das dritte Blechelement (13) aufeinanderfolgend einen dritten Polschuhabschnitt (20), einen zweiten Spulenkernabschnitt (19) und einen vierten Jochelementabschnitt (22) aufweist und wobei der erste Polschuhabschnitt (14) und der dritte Polschuhabschnitt (20) zusammen den ersten Polschuh (8) bilden, wobei der zweite Polschuhabschnitt (17) den zweiten Polschuh (9) bildet, wobei der erste Spulenkernabschnitt (15) und der zweite Spulenkernabschnitt (19) zusammen den Spulenkern (5) bilden, wobei der erste Jochelementabschnitt (16) und der zweite Jochelementabschnitt (18) zusammen das erste Jochelement (6) bilden und wobei der dritte Jochelementabschnitt (21) und der vierte Jochelementabschnitt (22) zusammen das zweite Jochelement (7) bilden.

4. Magnetisch-induktives Durchflussmessgerät (1) nach Anspruch 3, **dadurch gekennzeichnet, dass** der erste Polschuhabschnitt (14) und der dritte Polschuhabschnitt (20) L-förmig ausgebildet sind und dass der erste Spulenkernabschnitt (15) und der zweite Spulenkernabschnitt (19) streifenförmig ausgebildet sind und an die Oberseite (24) des L-Bodens (25) ansetzend parallel zum L-Schaft (26) verlaufend angeordnet sind.

5. Magnetisch-induktives Durchflussmessgerät (1) nach einem der Ansprüche 1 bis 4, **dadurch gekennzeichnet, dass** der den zweiten Polschuh (9) bildende zweite Polschuhabschnitt (17) rechteckig - insbesondere quadratisch - ausgebildet ist.

6. Magnetisch-induktives Durchflussmessgerät (1) nach einem der Ansprüche 1 bis 5, **dadurch gekennzeichnet, dass** die Jochelementabschnitte (16, 18, 21, 22) streifenförmig ausgebildet sind, insbesondere dass die Spulenkernabschnitte (15, 19) in zumindest die angrenzenden Jochelementabschnitte (16, 18, 21) übergehen.

7. Magnetisch-induktives Durchflussmessgerät (1) nach Anspruch 2 oder 3, **dadurch gekennzeichnet, dass** die Blechelemente (11, 12, 13) bündig miteinander verbunden sind oder dass die Blechelemente (11, 12, 13) zumindest teilweise überlappend miteinander verbunden sind.

8. Magnetkreisvorrichtung (4) für ein magnetisch-induktives Durchflussmessgerät (1) zum Führen eines Magnetfeldes, mit wenigstens einem Spulenkern (5), einem ersten Jochelement (6), einem zweiten Jochelement (7), einem ersten Polschuh (8) und einem zweiten Polschuh (9),
wobei die Magnetkreisvorrichtung (4) aus einem zumindest teilweise gebogenen Blechelement (10) gebildet ist, wobei das Blechelement (10) einen ersten Polschuhabschnitt (14), einen ersten Spulenkernabschnitt (15), einen ersten Jochelementabschnitt (16), einen zweiten Polschuhabschnitt (17), einen zweiten Jochelementabschnitt (18), einen zweiten Spulenkernabschnitt (19) und einen dritten Polschuhabschnitt (20) aufweist, und wobei das Blechelement (10) derart gebogen ist, dass der erste Polschuhabschnitt (14) und der dritte Polschuhabschnitt (20) zusammen den ersten Polschuh (8) bilden, der zweite Polschuhabschnitt (17) den zweiten Polschuh (9) bildet, der erste Jochelementabschnitt (16) das erste Jochelement (6) bildet, der zweite Jochelementabschnitt (18) das zweite Jochelement (7) bildet und der erste Spulenkernabschnitt (15) und der zweite Spulenkernabschnitt (19) zusammen den Spulenkern (5) bilden,
**dadurch gekennzeichnet,**
**dass** der erste Polschuhabschnitt (14) und der dritte Polschuhabschnitt (20) L-förmig ausgebildet sind und dass der erste Spulenkernabschnitt (15) und der zweite Spulenkernabschnitt (19) streifenförmig ausgebildet sind und an die Oberseite (24) des L-Bodens (25) ansetzend parallel zum L-Schaft (26) verlaufend angeordnet sind.

9. Magnetkreisvorrichtung (4) für ein magnetisch-induktives Durchflussmessgerät (1) zum Führen eines Magnetfeldes, mit wenigstens einem Spulenkern (5), einem ersten Jochelement (6), einem zweiten Jochelement (7), einem ersten Polschuh (8) und einem zweiten Polschuh (9),
**dadurch gekennzeichnet,**
**dass** die Magnetkreisvorrichtung (4) aus einer Mehrzahl von zumindest teilweise gebogenen Blechelementen (11, 12) gebildet ist, nämlich dass die Magnetkreisvorrichtungen (4) aus zwei Blechelement (11, 12) gebildet ist, wobei das erste Blechelement (11) einen ersten Polschuhabschnitt (14) aufweist und den ersten Polschuh (8) bildet und wobei das zweite Blechelement (12) einen ersten Spulenkernabschnitt (15), einen ersten Jochelementabschnitt (16), einen zweiten Polschuhabschnitt (17), einen zweiten Jochelementabschnitt (18) und einen zweiten Spulenkernabschnitt (19) aufweist und derart gebogen ist, dass der erste Spulenkernabschnitt (15) und der zweite Spulenkernabschnitt (19) zusammen den Spulenkern (5) bilden, der erste Jochelementabschnitt (16) das erste Jochelement (6) bildet und der zweite Jochelementabschnitt (18) das zweite Jochelement (7) bildet.

10. Magnetkreisvorrichtung (4) für ein magnetisch-induktives Durchflussmessgerät (1) zum Führen eines Magnetfeldes, mit wenigstens einem Spulenkern (5), einem ersten Jochelement (6), einem zweiten Jochelement (7), einem ersten Polschuh (8) und einem zweiten Polschuh (9),
**dadurch gekennzeichnet,**
**dass** die Magnetkreisvorrichtung (4) aus einer Mehrzahl von zumindest teilweise gebogenen Blechelementen (11, 12, 13) gebildet ist, nämlich aus einem ersten Blechelement (11), einem zweiten Blechelement (12) und einem dritten Blechelement (13) gebildet ist, dass das erste Blechelement (11) aufeinanderfolgend einen ersten Polschuhabschnitt (14), einen ersten Spulenkernabschnitt (15) und einen ersten Jochelementabschnitt (16) aufweist, dass das zweite Blechelement (12) aufeinanderfolgend einen zweiten Jochelementabschnitt (18), einen zweiten Polschuhabschnitt (17) und einen dritten Jochelementabschnitt (21) aufweist und dass das dritte Blechelement (13) aufeinanderfolgend einen dritten Polschuhabschnitt (20), einen zweiten Spulenkernabschnitt (19) und einen vierten Jochelementabschnitt (22) aufweist und wobei der erste Polschuhabschnitt (14) und der dritte Polschuhabschnitt (20) zusammen den ersten Polschuh (8) bilden, wobei der zweite Polschuhabschnitt (17) den zweiten Polschuh (9) bildet, wobei der erste Spulenkernabschnitt (15) und der zweite Spulenkernabschnitt (19) zusammen den Spulenkern (5) bilden, wobei der erste Jochelementabschnitt (16) und der zweite Jochelementabschnitt (18) zusammen das erste Jochelement (6) bilden und wobei der dritte Jochelementabschnitt (21) und der vierte Jochelementabschnitt (22) zusammen das zweite Jochelement (7) bilden.

11. Magnetkreisvorrichtung (4) nach Anspruch 8, **dadurch gekennzeichnet, dass** die Magnetkreisvorrichtung (4) gemäß den die Magnetkreisvorrichtung (4) kennzeichnenden Merkmalen eines der Patentansprüche 5 oder 6 ausgebildet ist.

12. Magnetkreisvorrichtung (4) nach Anspruch 9 oder 10, **dadurch gekennzeichnet, dass** die Magnetkreisvorrichtung (4) gemäß den die Magnetkreisvorrichtung (4) kennzeichnenden Merkmalen eines der Patentansprüche 4 bis 7 ausgebildet ist.

13. Verfahren zur Herstellung einer Magnetkreisvorrichtung für ein magnetisch-induktives Durchflussmessgerät zum Führen eines Magnetfeldes mit einer Spule, wobei die Magnetkreisvorrichtung wenigstens einen Spulenkern, ein erstes Jochelement, ein zweites Jochelement, einen ersten Polschuh und einen zweiten Polschuh aufweist, wobei die Spule den Spulenkern der fertig hergestellten Magnetkreisvorrichtung umgibt,
**dadurch gekennzeichnet,**
**dass** in einem Austrennschritt (101) wenigstens ein Blechelement aus einem ebenen Ausgangsblech herausgetrennt wird, dass in einem Führungsschritt (102) das wenigstens eine Blechelement durch die Spule geführt wird und dass in einem Biegeschritt (103) das wenigstens eine Blechelement zu der Magnetkreisvorrichtung gebogen wird, wobei der Biegeschritt (103) nach dem Führungsschritt (102) durchgeführt wird, oder wobei der Biegeschritt (103) eine Mehrzahl von Teil-Biegeschritten aufweist und eine erste Anzahl der Teil-Biegeschritte (103') ausgeführt wird, dann der Führungsschritt (102) ausgeführt wird und anschließend die verbleibenden Teil-Biegeschritte (103") ausgeführt werden.

14. Verfahren nach Anspruch 13, **dadurch gekennzeichnet, dass** im Austrennschritt (101) mehrere Blechelemente aus einem ebenen Ausgangsblech herausgetrennt werden, dass im Führungsschritt (102) wenigstens eins der Blechelemente durch die Spule geführt wird, dass im Biegeschritt (103) die mehreren Blechelemente zu jeweils einem Teilabschnitt der Magnetkreisvorrichtung gebogen werden und dass in einem Verbindungsschritt (104) die mehreren Blechelemente miteinander zu der Magnetkreisvorrichtung verbunden werden.

15. Verfahren nach Anspruch 13 oder 14, wobei der Biegeschritt (103) eine Mehrzahl von Teil-Biegeschritten aufweist und eine erste Anzahl der Teil-Biegeschritte (103') ausgeführt wird, dann der Führungsschritt (102) ausgeführt wird und anschließend die verbleibenden Teil-Biegeschritte (103") ausgeführt werden, **dadurch gekennzeichnet, dass** durch die verbleibenden Teil-Biegeschritte (103") eine formschlüssige Verbindung zwischen der Magnetkreisvorrichtung und der Spule hergestellt wird.

## Claims

1. Magnetic-inductive flowmeter (1), having a measuring tube (2) for guiding an electrically conductive medium, having a coil (3) for generating a magnetic field which passes at least partially through the measuring tube (2), and having a magnetic circuit device (4) for guiding the magnetic field outside the measuring tube (2) wherein the magnetic circuit device (4) comprises at least one coil core (5), a first yoke element (6), a second yoke element (7), a first pole shoe (8) and a second pole shoe (9), wherein the coil core (5) is arranged inside the coil (3) and wherein the measuring tube (2) is arranged between the first pole shoe (8) and the second pole shoe (9),
wherein the magnetic circuit device (4) is formed of an at least partially bent sheet metal element (10), wherein the sheet metal element (10) comprises a first pole shoe portion (14), a first coil core portion (15), a first yoke element portion (16), a second pole shoe portion (17), a second yoke element portion (18), a second coil core portion (19) and a third pole shoe portion (20), and wherein the sheet metal element (10) is bent in such a manner that the first pole shoe portion (14) and the third pole shoe portion (20) together form the first pole shoe (8), the second pole shoe portion (17) forms the second pole shoe (9), the first yoke member portion (16) forms the first yoke member (6), the second yoke member portion (18) forms the second yoke member (7), and the first coil core portion (15) and the second coil core portion (19) together form the coil core (5)
**characterized in**
**that** the first pole shoe portion (14) and the third pole shoe portion (20) are designed in L-shape and that the first coil core portion (15) and the second coil core portion (19) are designed in strip shape and are arranged to be attached to the upper side (24) of the L-bottom (25) and to extend parallel to the L-shaft (26).

2. Magnetic-inductive flowmeter (1), having a measuring tube (2) for guiding an electrically conductive medium, having a coil (3) for generating a magnetic field which passes at least partially through the measuring tube (2), and having a magnetic circuit device (4) for guiding the magnetic field outside the measuring tube (2), wherein the magnetic circuit device (4) has at least one coil core (5), a first yoke element (6), a second yoke element (7), a first pole shoe (8) and a second pole shoe (9), wherein the coil core (5) is arranged inside the coil (3) and wherein the measuring tube (2) is arranged between the first pole shoe (8) and the second pole shoe (9)
**characterized in**
**that** the magnetic circuit device (4) is formed of a plurality of at least partially bent sheet metal elements (11, 12), namely that the magnetic circuit device (4) is formed of two sheet metal elements (11, 12), wherein the first sheet metal element (11) has a first pole shoe portion (14) and forms the first pole shoe (8) and wherein the second sheet metal element (12) has a first coil core portion (15), a first yoke element portion (16), a second pole shoe portion (17), a second yoke member portion (18), and a second coil core portion (19) and is bent such that the first coil core portion (15) and the second coil core portion (19) together form the coil core (5), the first yoke member portion (16) forms the first yoke member (6), and the second yoke member portion (18) forms the second yoke member (7).

3. Magnet-inductive flowmeter (1), having a measuring tube (2) for guiding an electrically conductive medium, having a coil (3) for generating a magnetic field which passes at least partially through the measuring tube (2), and having a magnetic circuit device (4) for guiding the magnetic field outside the measuring tube (2) wherein the magnetic circuit device (4) has at least one coil core (5), a first yoke element (6), a second yoke element (7), a first pole shoe (8) and a second pole shoe (9), wherein the coil core (5) is arranged inside the coil (3) and wherein the measuring tube (2) is arranged between the first pole shoe (8) and the second pole shoe (9)
**characterized in**
**that** the magnetic circuit device (4) is formed of a plurality of at least partially bent sheet metal elements (11, 12, 13), namely a first sheet metal element (11), a second sheet metal element (12) and a third sheet metal element (13), that the first sheet metal element (11) successively comprises a first pole shoe portion (14) a first coil core portion (15) and a first yoke portion (16), that the second sheet metal element (12) successively comprises a second yoke portion (18), a second pole shoe portion (17) and a third yoke portion (21), and that the third sheet metal element (13) successively comprises a third pole shoe portion (20), a second coil core portion (19) and a fourth yoke portion (19), and wherein the first pole shoe portion (14) and the third pole shoe portion (20) together form the first pole shoe (8), the second pole shoe portion (17) forming the second pole shoe (9) wherein the first coil core portion (15) and the second coil core portion (19) together form the coil core (5), wherein the first yoke portion (16) and the second yoke portion (18) together form the first yoke element (6), and wherein the third yoke portion (21) and the fourth yoke portion (22) together form the second yoke element (7).

4. Magnetic-inductive flowmeter (1) according to claim 3, **characterized in that** the first pole shoe portion (14) and the third pole shoe portion (20) are designed in an L-shape, and **in that** the first coil core portion (15) and the second coil core portion (19) are designed in a strip shape and are arranged to be attached to the upper side (24) of the L-bottom (25) so as to extend parallel to the L-shaft (26).

5. Magnetic-inductive flowmeter (1) according to any one of claims 1 to 4, **characterized in that** the second pole shoe portion (17) forming the second pole shoe (9) is designed rectangular - in particular square.

6. Magnetic-inductive flowmeter (1) according to any one of claims 1 to 5, **characterized in that** the yoke portions (16, 18, 21, 22) are designed in the form of strips, in particular **in that** the coil core portions (15, 19) merge into at least the adjacent yoke portions (16, 18, 21).

7. Magnetic-inductive flowmeter (1) according to claim 2 or 3, **characterized in that** the sheet metal elements (11, 12, 13) are connected flush with one another or that the sheet metal elements (11, 12, 13) are connected at least partially overlapping with one another.

8. Magnetic circuit device (4) for a magnetic-inductive flowmeter (1) for guiding a magnetic field, having at least one coil core (5), a first yoke element (6), a second yoke element (7), a first pole shoe (8) and a second pole shoe (9)
wherein the magnetic circuit device (4) is formed from an at least partially bent sheet metal element (10), wherein the sheet metal element (10) has a first pole shoe portion (14), a first coil core portion (15), a first yoke element portion (16), a second pole shoe portion (17), a second yoke element portion (18), a second coil core portion (19) and a third pole shoe portion (20), and wherein the sheet metal element (10) is bent in such a manner that the first pole shoe portion (14) and the third pole shoe portion (20) together form the first pole shoe (8), the second pole shoe portion (17) forms the second pole shoe (9), the first yoke portion (16) forms the first yoke element (6), the second yoke portion (18) forms the second yoke element (7), and the first coil core portion (15) and the second coil core portion (19) together form the coil core (5)
**characterized in**
**that** the first pole shoe portion (14) and the third pole shoe portion (20) are designed in L-shape and that the first coil core portion (15) and the second coil core portion (19) are designed in strip shape and are arranged to be attached to the upper side (24) of the L-base (25) and to extend parallel to the L-shaft (26).

9. Magnetic circuit device (4) for a magnetic-inductive flowmeter (1) for guiding a magnetic field, having at least one coil core (5), a first yoke element (6), a second yoke element (7), a first pole shoe (8) and a second pole shoe (9)
**characterized in**
**that** the magnetic circuit device (4) is formed of a plurality of at least partially bent sheet metal elements (11, 12), namely that the magnetic circuit device (4) is formed of two sheet metal elements (11, 12), wherein the first sheet metal element (11) has a first pole shoe portion (14) and forms the first pole shoe (8) and wherein the second sheet metal element (12) has a first coil core portion (15), a first yoke portion (16), a second pole shoe portion (17), a second yoke portion (18), and a second coil core portion (19) and is bent such that the first coil core portion (15) and the second coil core portion (19) together form the coil core (5), the first yoke portion (16) forms the first yoke element (6), and the second yoke portion (18) forms the second yoke element (7).

10. Magnetic circuit device (4) for a magnetic-inductive flowmeter (1) for guiding a magnetic field, having at least one coil core (5), a first yoke element (6), a second yoke element (7), a first pole shoe (8) and a second pole shoe (9)
**characterized in**
**that** the magnetic circuit device (4) is formed of a plurality of at least partially bent sheet metal elements (11, 12, 13), namely a first sheet metal element (11), a second sheet metal element (12) and a third sheet metal element (13), that the first sheet metal element (11) successively comprises a first pole shoe portion (14), a first coil core portion (15) and a first yoke portion (16) that the second sheet metal element (12) successively comprises a second yoke portion (18), a second pole shoe portion (17) and a third yoke portion (21), and that the third sheet metal element (13) successively comprises a third pole shoe portion (20), a second coil core portion (19) and a fourth yoke portion (22), and wherein the first pole shoe portion (14) and the third pole shoe portion (20) together form the first pole shoe (8), wherein the second pole shoe portion (17) forms the second pole shoe (9), wherein the first coil core portion (15) and the second coil core portion (19) together form the coil core (5), wherein the first yoke portion (16) and the second yoke portion (18) together form the first yoke element (6), and wherein the third yoke portion (21) and the fourth yoke portion (22) together form the second yoke element (7).

11. Magnetic circuit device (4) according to claim 8, **characterized in that** the magnetic circuit device (4) is designed according to the features characterizing the magnetic circuit device (4) of any one of claims 5 or 6.

12. Magnetic circuit device (4) according to claim 9 or 10, **characterized in that** the magnetic circuit device (4) is designed according to the features characterizing the magnetic circuit device (4) of any one of claims 4 to 7.

13. Method for manufacturing a magnetic circuit device for a magnetic-inductive flowmeter for guiding a magnetic field with a coil, wherein the magnetic circuit device comprises at least a coil core, a first yoke element, a second yoke element, a first pole shoe and a second pole shoe, wherein the coil surrounds the coil core of the finished magnetic circuit device,
**characterized in**
**that** in a separating step (101) at least one sheet metal element is separated from a planar starting sheet, that in a guiding step (102) the at least one sheet metal element is guided through the coil, and that in a bending step (103) the at least one sheet metal element is bent into the magnetic circuit device, wherein the bending step (103) is performed after the guiding step (102), or wherein the bending step (103) comprises a plurality of partial bending steps and a first number of the partial bending steps (103') is performed, then the guiding step (102) is performed, and subsequently the remaining partial bending steps (103") are performed.

14. Method according to claim 13, **characterized in that** in the separating step (101) a plurality of sheet metal elements are separated from a planar starting sheet, that in the guiding step (102) at least one of the sheet metal elements is guided through the coil, that in the bending step (103) the plurality of sheet metal elements are each bent to form a section of the magnetic circuit device, and that in a connecting step (104) the plurality of sheet metal elements are connected to each other to form the magnetic circuit device.

15. Method according to claim 13 or 14, wherein the bending step (103) comprises a plurality of partial bending steps and a first number of the partial bending steps (103') is performed, then the guiding step (102) is performed, and then the remaining partial bending steps (103") are performed, **characterized in that** a positive connection between the magnetic circuit device and the coil is established by the remaining partial bending steps (103").

## Revendications

1. Débitmètre à induction magnétique (1), comprenant un tube de mesure (2) destiné à guider un milieu électriquement conducteur, une bobine (3) destinée à générer un champ magnétique qui traverse au moins partiellement le tube de mesure (2), et un dispositif à circuit magnétique (4) destiné à guider le champ magnétique à l'extérieur du tube de mesure (2), le dispositif à circuit magnétique (4) comportant au moins un noyau de bobine (5), un premier élément de culasse (6), un deuxième élément de culasse (7), une première pièce polaire (8) et une deuxième pièce polaire (9), le noyau de bobine (5) étant disposé à l'intérieur de la bobine (3) et le tube de mesure (2) étant disposé entre la première pièce polaire (8) et la deuxième pièce polaire (9),
le dispositif à circuit magnétique (4) étant formé à partir d'un élément en tôle (10) au moins partiellement plié, l'élément en tôle (10) comportant une première portion de pièce polaire, une première portion de noyau de bobine (15), une première portion d'élément de culasse (16), une deuxième portion de pièce polaire (17), une deuxième portion d'élément de culasse (18), une deuxième portion de noyau de bobine (19) et une troisième portion de pièce polaire (20), et l'élément en tôle (10) étant plié de manière à ce que la première portion de pièce polaire (14) et la troisième portion de pièce polaire (20) forment conjointement la première pièce polaire (8), la deuxième portion de pièce polaire (17) forme la deuxième pièce polaire (9), la première portion d'élément de culasse (16) forme le premier élément de culasse (6), la deuxième portion d'élément de culasse (18) forme le deuxième élément de culasse (7) et la première portion de noyau de bobine (15) et la deuxième portion de noyau de bobine (19) forment conjointement le noyau de bobine (5),
**caractérisé en ce que** la première portion de pièce polaire (14) et la troisième portion de pièce polaire (20) sont en forme de L et **en ce que** la première portion de noyau de bobine (15) et la deuxième portion de noyau de bobine (19) sont en forme de bande et sont disposées en appui sur le côté supérieur (24) du fond en L (25) en s'étendant parallèlement à la tige en L (26) .

2. Débitmètre à induction magnétique (1) comprenant un tube de mesure (2) destiné à guider un milieu électriquement conducteur, une bobine (3) destinée à générer un champ magnétique qui traverse au moins partiellement le tube de mesure (2), et un dispositif à circuit magnétique (4) destiné à guider le champ magnétique à l'extérieur du tube de mesure (2), le dispositif à circuit magnétique (4) comportant au moins un noyau de bobine (5), un premier élément de culasse (6), un deuxième élément de culasse (7), une première pièce polaire (8) et une deuxième pièce polaire (9), le noyau de bobine (5) étant disposé à l'intérieur de la bobine (3) et le tube de mesure (2) étant disposé entre la première pièce polaire (8) et la deuxième pièce polaire (9),
**caractérisé en ce que**
le dispositif à circuit magnétique (4) est formé d'une pluralité d'éléments en tôle (11, 12) au moins partiellement pliés, à savoir
les dispositifs à circuit magnétique (4) sont formés de deux éléments en tôle (11, 12),
le premier élément en tôle (11) comportant une première portion de pièce polaire (14) et formant la première pièce polaire (8) et le deuxième élément en tôle (12) comportant une première portion de noyau de bobine (15), une première portion d'élément de culasse (16), une deuxième portion de pièce polaire (17), une deuxième portion d'élément de culasse (18) et une deuxième portion de noyau de bobine (19) et étant plié de manière à ce que la première portion de noyau de bobine (15) et la deuxième portion de noyau de bobine (19) forment conjointement le noyau de bobine (5), la première portion d'élément de culasse (16) forme le premier élément de culasse (6) et la deuxième portion d'élément de culasse (18) forme le deuxième élément de culasse (7).

3. Débitmètre à induction magnétique (1) comprenant un tube de mesure (2) destiné à guider un milieu électriquement conducteur, une bobine (3) destinée à générer un champ magnétique qui traverse au moins partiellement le tube de mesure (2), et un dispositif à circuit magnétique (4) destiné à guider le champ magnétique à l'extérieur du tube de mesure (2), le dispositif à circuit magnétique (4) comportant au moins un noyau de bobine (5), un premier élément de culasse (6), un deuxième élément de culasse (7), une première pièce polaire (8) et une deuxième pièce polaire (9), le noyau de bobine (5) étant disposé à l'intérieur de la bobine (3) et le tube de mesure (2) étant disposé entre la première pièce polaire (8) et la deuxième pièce polaire (9),
**caractérisé en ce que**
le dispositif à circuit magnétique (4) est formé d'une pluralité d'éléments en tôle (11, 12, 13) au moins partiellement pliés, à savoir d'un premier élément en tôle (11), d'un deuxième élément en tôle (12) et d'un troisième élément en tôle (13),
le premier élément en tôle (11) comporte successivement une première portion de pièce polaire, une première portion de noyau de bobine (15) et une première portion d'élément de culasse (16),
le deuxième élément en tôle (12) comporte successivement une deuxième portion d'élément de culasse (18), une deuxième portion de pièce polaire (17) et une troisième portion d'élément de culasse (21), et
le troisième élément en tôle (13) comporte successivement une troisième portion de pièce polaire (20), une deuxième portion de noyau de bobine (19) et une quatrième portion d'élément de culasse (22), et
la première portion de pièce polaire (14) et la troisième portion de pièce polaire (20) formant conjointement la première pièce polaire (8), la deuxième portion de pièce polaire (17) formant la deuxième pièce polaire (9), la première portion de noyau de bobine (15) et la deuxième portion de noyau de bobine (19) formant conjointement le noyau de bobine (5), la première portion d'élément de culasse (16) et la deuxième portion d'élément de culasse (18) formant conjointement le premier élément de culasse (6) et la troisième portion d'élément de culasse (21) et la quatrième portion d'élément de culasse (22) formant conjointement le deuxième élément de culasse (7).

4. Débitmètre à induction magnétique (1) selon la revendication 3, **caractérisé en ce que** la première portion de pièce polaire (14) et la troisième portion de pièce polaire (20) sont en forme de L et **en ce que** la première portion de noyau de bobine (15) et la deuxième portion de noyau de bobine (19) sont en forme de bande et sont disposées en appui sur le côté supérieur (24) du fond en L (25) en s'étendant parallèlement à la tige en L (26).

5. Débitmètre à induction magnétique (1) selon l'une des revendications 1 à 4, **caractérisé en ce que** la deuxième portion de pièce polaire (17) formant la deuxième pièce polaire (9) est de forme rectangulaire, notamment carrée.

6. Débitmètre à induction magnétique (1) selon l'une des revendications 1 à 5, **caractérisé en ce que** les portions d'élément de culasse (16, 18, 21, 22) sont réalisées sous forme de bandes, en particulier **en ce que** les portions de noyau de bobine (15, 19) se transforment en au moins les portions d'élément de culasse (16, 18, 21) adjacentes.

7. Débitmètre à induction magnétique (1) selon la revendication 2 ou 3, **caractérisé en ce que** les éléments en tôle (11, 12, 13) sont reliés à fleur l'un de l'autre ou **en ce que** les éléments en tôle (11, 12, 13) sont reliés les uns aux autres en se chevauchant au moins partiellement.

8. Dispositif à circuit magnétique (4) destiné à un débitmètre à induction magnétique (1), destiné à guider un champ magnétique, et comprenant au moins un noyau de bobine (5), un premier élément de culasse (6), un deuxième élément de culasse (7), une première pièce polaire (8) et une deuxième pièce polaire (9),
le dispositif à circuit magnétique (4) étant formé à partir d'un élément en tôle (10) au moins partiellement plié, l'élément en tôle (10) comportant une première portion de pièce polaire, une première portion de noyau de bobine (15), une première portion d'élément de culasse (16), une deuxième portion de pièce polaire (17), une deuxième portion d'élément de culasse (18), une deuxième portion de noyau de bobine (19) et une troisième portion de pièce polaire (20), et l'élément en tôle (10) étant plié de manière à ce que la première portion de pièce polaire (14) et la troisième portion de pièce polaire (20) forment conjointement la première pièce polaire (8), la deuxième portion de pièce polaire (17) forme la deuxième pièce polaire (9), la première portion d'élément de culasse (16) forme le premier élément de culasse (6), la deuxième portion d'élément de culasse (18) forme le deuxième élément de culasse (7) et la première portion de noyau de bobine (15) et la deuxième portion de noyau de bobine (19) forment conjointement le noyau de bobine (5),
**caractérisé en ce que** la première portion de pièce polaire (14) et la troisième portion de pièce polaire (20) sont en forme de L et **en ce que** la première portion de noyau de bobine (15) et la deuxième portion de noyau de bobine (19) sont en forme de bande et sont disposées en appui sur le côté supérieur (24) du fond en L (25) en s'étendant parallèlement à la tige en L (26) .

9. Dispositif à circuit magnétique (4) destiné à un débitmètre à induction magnétique (1), destiné à guider un champ magnétique, et comprenant au moins un noyau de bobine (5), un premier élément de culasse (6), un deuxième élément de culasse (7), une première pièce polaire (8) et une deuxième pièce polaire (9),
**caractérisé en ce que**
le dispositif à circuit magnétique (4) est formé d'une pluralité d'éléments en tôle (11, 12) au moins partiellement pliés, à savoir le dispositif à circuit magnétique (4) est formé de deux éléments en tôle (11, 12), le premier élément en tôle (11) comportant une première portion de pièce polaire (14) et formant la première pièce polaire (8) et le deuxième élément en tôle (12) comportant une première portion de noyau de bobine (15), une première portion d'élément de culasse (16), une deuxième portion de pièce polaire (17), une deuxième portion d'élément de culasse (18) et une deuxième portion de noyau de bobine (19) et étant plié de manière à ce que la première portion de noyau de bobine (15) et la deuxième portion de noyau de bobine (19) forment conjointement le noyau de bobine (5), la première portion d'élément de culasse (16) forme le premier élément de culasse (6) et la deuxième portion d'élément de culasse (18) forme le deuxième élément de culasse (7).

10. Dispositif à circuit magnétique (4) destiné à un débitmètre à induction magnétique (1), destiné à guider un champ magnétique, et comprenant au moins un noyau de bobine (5), un premier élément de culasse (6), un deuxième élément de culasse (7), une première pièce polaire (8) et une deuxième pièce polaire (9), **caractérisé en ce que**
le dispositif à circuit magnétique (4) est formé d'une pluralité d'éléments en tôle (11, 12, 13) au moins partiellement pliés, à savoir d'un premier élément en tôle (11), d'un deuxième élément en tôle (12) et d'un troisième élément en tôle (13),
le premier élément en tôle (11) comporte successivement une première portion de pièce polaire (14), une première portion de noyau de bobine (15) et une première portion d'élément de culasse (16),
le deuxième élément en tôle (12) comporte successivement une deuxième portion d'élément de culasse (18), une deuxième portion de pièce polaire (17) et une troisième portion d'élément de culasse (21) et
le troisième élément en tôle (13) comporte successivement une troisième portion de pièce polaire (20), une deuxième portion de noyau de bobine (19) et une quatrième portion d'élément de culasse (22) et
la première portion de pièce polaire (14) et la troisième portion de pièce polaire (20) formant conjointement la première pièce polaire (8), la deuxième portion de pièce polaire (17) formant la deuxième pièce polaire (9), la première portion de noyau de bobine (15) et la deuxième portion de noyau de bobine (19) formant conjointement le noyau de bobine (5), la première portion d'élément de culasse (16) et la deuxième portion d'élément de culasse (18) formant conjointement le premier élément de culasse (6) et la troisième portion d'élément de culasse (21) et la quatrième portion d'élément de culasse (22) formant conjointement le deuxième élément de culasse (7).

11. Dispositif à circuit magnétique (4) selon la revendication 8, **caractérisé en ce que** le dispositif à circuit magnétique (4) est conçu selon les caractéristiques de l'une des revendications 5 et 6 qui caractérisent le dispositif à circuit magnétique (4).

12. Dispositif à circuit magnétique (4) selon la revendication 9 ou 10, **caractérisé en ce que** le dispositif à circuit magnétique (4) est conçu selon les caractéristiques de l'une des revendications 4 à 7 qui caractérisent le dispositif à circuit magnétique (4).

13. Procédé de réalisation d'un dispositif à circuit magnétique destiné à un débitmètre à induction magnétique, destiné à guider un champ magnétique, et comportant une bobine, le dispositif à circuit magnétique comportant au moins un noyau de bobine, un premier élément de culasse, un deuxième élément de culasse, une première pièce polaire et une deuxième pièce polaire, la bobine entourant le noyau de bobine du dispositif à circuit magnétique fini,
**caractérisé en ce que**
dans une étape de découpe (101) au moins un élément en tôle est découpé dans une tôle de départ plane,
dans une étape de guidage (102) l'au moins un élément en tôle est guidé à travers la bobine et
dans une étape de pliage (103) l'au moins un élément en tôle est plié pour former le dispositif à circuit magnétique, l'étape de pliage (103) étant réalisée après l'étape de guidage (102), ou l'étape de pliage (103) comprenant une pluralité de sous-étapes de pliage et un premier nombre de sous-étapes de pliage (103') étant réalisées, puis l'étape de guidage (102) étant réalisée et ensuite les sous-étapes de pliage restantes (103") étant réalisées.

14. Procédé selon la revendication 13, **caractérisé en ce que**
dans l'étape de découpe (101) une pluralité d'éléments en tôle sont découpés dans une tôle de départ plane, dans l'étape de guidage (102) au moins un des éléments en tôle est guidé à travers la bobine,
dans l'étape de pliage (103) la pluralité d'éléments en tôle sont chacun pliés pour former une portion du dispositif à circuit magnétique et
dans une étape de liaison (104) la pluralité d'éléments en tôle sont reliés les uns aux autres pour former le dispositif à circuit magnétique.

15. Procédé selon la revendication 13 ou 14,
l'étape de pliage (103) comprenant une pluralité de sous-étapes de cintrage et un premier nombre de sous-étapes de pliage (103') sont réalisées, puis l'étape de guidage (102) est réalisée et ensuite les sous-étapes de pliage restantes (103") sont réalisées, **caractérisé en ce qu'**une liaison par complémentarité de formes entre le dispositif à circuit magnétique et la bobine est réalisée par les sous-étapes de pliage restantes (103").
